# EUROPEAN PATENT APPLICATION

(11) **EP 1 513 313 A1**
(43) Date of publication of application: **09.03.2005**
(21) Application number: 03292197.5
(22) Date of filing: 08.09.2003
(51) Int. Cl.: H04L 29/06

(54) **A method of accessing a network service or resource, a network terminal and a personal user device therefore**

(71) Applicant: ALCATEL, 75008 Paris (FR)
(72) Inventor: Rupp, Stephan, Dr., 74354 Besigheim (DE); Köstering, Nina, 70499 Stuttgart (DE); Duspiva, Matthias, 71229 Leonberg (DE)
(74) Representative: Rausch, Gabriele, Dr.

(57) **Abstract**

The invention concerns a method of accessing a service or resource provided to a user of a network terminal (T1), wherein the access data is controlled by the user. Before granting access, the steps of
- sending a notification (M3) from the network terminal (T1) to a personal user device (T2), said notification (M3) comprising at least an identification of the requested service or resource,
- determining authentication data corresponding to said service or resource and said user by said personal users device (T2),
- sending said authentication data (M4) to said network terminal (T1) by said personal users device (T2) and
- generating a request response (M5) based on said authentication data (M4) by said network terminal (T1) are performed.

The invention concerns as well a network terminal and a personal user device therefore.

## Description

The present invention refers to a method according to the preamble of claim 1, a network terminal according to the preamble of claim 8 and a personal user device according to the preamble of claim 9 therefore.

Today, the well known world wide web, based on the so-called internet, is increasingly used for all kind of information or communication purposes. Information and services, distributed in network units all over the world, are often freely available, normally without any need for user identification, authentication and authorisation. But increasingly, commercial services are provided, that are e.g. based on a previous subscription or that comprises legal transactions (e.g. a contract of sale). Hence, access to those services need to be protected. Before a user might access to such services, he has previously to pass an authentication and authorisation procedure. Typically, the user of the internet sends a request in form of an internet address or a so-called unified resource locator (URL) to a network server, that returns a so-called web form for an input of the users User-ID and password. The user inputs the requested information and sends back the such completed form to the server. The server has stored a list of user-ID's and associated passwords. The server checks whether the received User-ID is stored and whether the received password complies to the stored password. Only if both checks are positive, access to the requested service or resources is granted.

In a more sophisticated solution, the password exchange is replaced by a so-called challenge response check. The access server therefore sends challenge data to the client terminal. The client terminal performs an operation on said data using a secret key stored inside said terminal. The same operation is performed within the network. The result on said operation is sent back to the access server, that checks, whether the received result is equal to the result obtained in the network.

One obstacle of said access procedures is, that the different servers are independent from each other. Hence, services provided by different service providers normally requires each an own access procedure. In principle, a user might keep one password for different services, but often there are different password constraints (number of digits/letters, renewal policy of passwords). Hence, handling of different passwords turns out to be cumbersome for a user subscribing to a number of services.

A actual development is to centralise access to network resources. A recently provided service is offered by the company Microsoft named "Passport". Therein, authentication is a centralised authentication service that offers a single logon and core profile services for member sites. The user is no longer obliged to log on to access new protected resources or sites. However services have to be compatible with Passport authentication and authorisation.

Centralised access further cause concern in view of data protection. Users have to trust in the centralised access service, because this service handles highly sensitive personal data.

It is an object of the invention to establish a method and to realise corresponding means for an access to services or resources, that allows an easy user interaction avoiding any centralised keeping of user data.

This object is achieved, according to the invention, by a method according to the teaching of claim 1, by a network terminal according to the teaching of claim 8 and a personal user device according to the teaching of claim 9.

The basic idea of the invention consists in, that personal authorisation data for an access of an network terminal to one of a plurality of different network services is stored in a personal device, e.g. in the users mobile phone controlled by the local user. After requesting a service from a service provider, a corresponding server sends back a request for returning access data, e.g. the user identification and a password for said service, to said server. The network terminal sends an information of this request comprising a service identification to said personal device. Said personal device determines authentication data corresponding to said service or resource and said user and sends the required data over the short range interface to the network terminal for further forwarding said data to the server.

Further refinements of the invention are to be found in the dependent claims and in the description below.

The invention is explained further below with the aid of the accompanying drawings:
- Fig. 1: schematically shows a block diagram comprising a network terminal and a personal user device according to the invention executing a communication sequence according to a method according to the invention and
- Fig.2: shows examples for a presentation of message contents on the displays of said personal user device and said network terminal respectively.

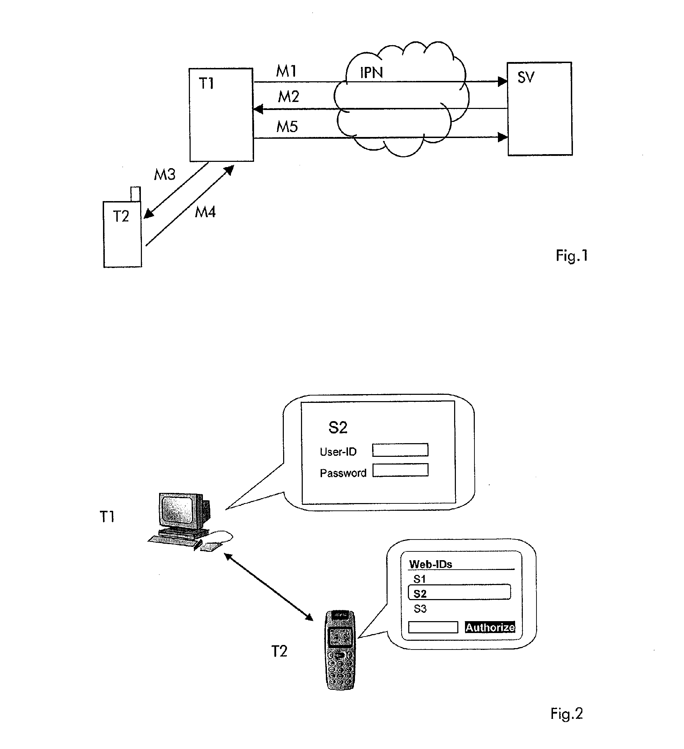

Fig. 1 shows a network terminal T1, a personal user device T2 a server SV and a network IPN between the network terminal and the server SV. A first message M1 is transferred from the network terminal T1 to the server SV, a second message M2 is transferred back from the server SV to the network terminal T1, a third message M3 is transferred from the network terminal T1 to the personal user device T2, a fourth message M4 is transferred back from the personal user device T2 to the network terminal and a fifth message M5 is transferred from the network terminal T1 to the network server SV.

The network IPN preferably is an open communication network based on an internet protocol suite and on the so-called world wide web (www) addressing, in the following shortly referred to as the internet. However the invention is not limited to a certain logical or physical network architecture. The invention might also be exploited in a closed internet protocol network, often referred to as intranet or to any other network like the well known mobile network according to GSM/GPRS standards. In the following, the network IPN however is considered as the internet.

The network terminal T1 is preferably a personal computer connected to the internet IPN e.g. by a conventional telephone line or any other communication link. The network terminal is comprising hardware with a processor unit, program memory and data memory and software with drivers for interface units like a keyboard. Further, a so-called browser is comprised that allows for a so-called hyper text transfer protocol (http) communication for receiving and sending so-called web pages to said (web) server SV.

A specific web page is a so-called web form. This web form is often sent from a server to a client comprising input fields for entering information by the client user. This information might consist in a name, a password, a cross in a field indicating a digital information (e.g. a choice). The client user sends back a completed form to the server by simply pressing a return key or by clicking on a mouse key.

The personal user device is any small computer, that is able to store personal data and to communicate with the network terminal. Exemplary, the network terminal T1 is a personal computer and the personal user device T2 is a mobile terminal. Both terminals T1 and T2 are equipped with short range communication means, e.g. a bluetooth interface or an infrared interface. Further, both terminals comprise application software for communicating with each other over said short range interface. This application software can e.g. be realised on the base Java Micro Edition provided by the company SUN.

The server SV might be a single unit or consist of an number of different physical units. This server SV can represent content server offering services itself or any access server offering access to further servers. This server might also be a network terminal itself. In the context of the present invention, a service should be understood in a broad way, e.g. any offering of information or legal rights. Granting access to services or resources should be understood in a broad way too, including granting legal rights.

In the following a simple sequence according to a method according to the invention is described:
a) The network terminal T1 sends the first message M1 to the server SV. This message represents a request for a service or an access to a remote resource provided or managed by said server SV. This message is not necessary, if the server SV starts offering a service to the network terminal T1 without any previous request from the network terminal T1.
b) The server SV returns the second message M2 consisting of a web form for entering authentication or identification and preferably service information (conditions etc.), representing a request for authentication data.
c) The network terminal T1 receives said second message M2, analyses said message for any personal identification or authentication request, generates the third message M3, said message M3 representing a notification with at least a service or server identification and said personal identification or authentication request over the short range interface to the personal user device T2.
d) The personal user device T2 receives and analyses said third message M3, identifying the specific service and the kind of request. In a data base of said user device T2, authentication data, e.g. a plurality of passwords, are stored and each mapped or linked to a corresponding service identifier. The user device T2 determines the requested authentication data and generates the fourth message M4 comprising said data.
e) The network terminal T1 receives said fourth message M4, retrieves the authentication data, inputs said data into the web form received as second message M2 and returns the such completed form back to the server SV as fifth message M5.
f) The server SV checks, according to the prior art, the received authentication data and grants access to the requested service or resources, if said check was positive.

In a first embodiment, said authentication data consists simply of a user identification (User ID) and a password. In the data base of the personal user terminal T2, a plurality of passwords and service identifications, e.g. service names or numbers are stored linked to each other, e.g. in an electronic table.

For protecting the communication between the user devices T1 and T2, the communication between said units is encrypted. Therefore symmetric key encryption might be used, wherein both units possess the same secret key. If additionally any changing value is added to information to be transmitted, e.g. a time stamp or a running number, any interception is useless as there will be never the same date transmitted two or more times.

Alternatively to symmetric key encryption, asymmetric key encryption might be used, wherein a secret key is stored in the personal user device T2 and a public key is stored in the network terminal T1 or directly in the server SV.

In a second encryption alternative, a session key negotiation is performed between the network terminal T1 and the personal user device T2 before a session, that is only valid for this session.

In an alternative and more sophisticated embodiment, an access protocol is executed between the server SV, the network terminal T1 and the personal user device T2, that offers protection against a reply of a password, that might have been determined by interception. One example for such a protocol is a so-called challenge-response protocol, that proceeds as follows:

The server SV, or any network authentication unit connected to or contacted by said server SV, generates and sends a challenge value "c" to the client, i.e. the personal user device T2. Using a secret value "s" and an appropriate challenge function f(), the client computes a response value "v" = f(c, s), and returns this response value (over the network terminal T1) to the server SV. Said server SV unit verifies the response value "v", and grants access, if the verification is successful.

The challenge-response authentication is a significant improvement over password identification because any attack by interception reply of a passwords not possible. This is achieved by using varying challenge values. The challenge value "c" can be a randomly generated value. If the challenge function is the same for all the protocols that are required by the services regarded here, the personal user device T2 has simply to store a plurality of secret values linked to each one service. If there are different functions or, more general, different algorithms for different services, the personal user device T2 has stored for each service a different function or algorithm. Receiving a notification from the network terminal T1, the service is identified and an appropriate algorithm is started for determining the requested authentication data.

For determining the response value, a so-called Subscriber Identity Module (SIM-card) integrated are connected to the personal user device T2 can be used. If the personal user device is a mobile terminal, the existing SIM-card can be preferably used.

For a protection against not authorised use of the personal user device T2, any activation of the authentication function is protected with a personal identification number (PIN), that has to be entered by pressing a specific sequence of keys.

The protocol between the server SV and the user terminals T1 and T2 might run fully automatically. However, in a preferred embodiment, the user is asked for authorisation of each access request, e.g. by pressing a key or soft button of the users personal device T2.

In the above embodiments, communication between the network terminal T1 and the personal user device is executed over a short range interface. Alternatively, said communication can also be carried out over a communication network, e.g. a mobile network, that connects both the network terminal T1 and the personal user device T2. Preferably, information can be exchanged by means of short text messages, so-called SMS messages.

Fig.2 shows examples for a presentation of contents of the second and the third message M2 and M3 on the displays of said network terminal T1 and of said personal user device T2 respectively. The content of the second message M2 is presented as web form as described above. This web from comprises the name of the service or any other service identification like a logo and one empty field for an input of the user identification (user-ID) and one empty field for an input of a password. The content of the third message M3 on the personal user device T2 is presented in form of a list with exemplary services S1-S3. By way of example a second service S2 is pre-selected. A soft button named "authorised" is indicated at the bottom of the display, that can be activated by pressing an associated key. The resolution or the amount of information depend on the graphical capabilities of the personal user device.

## Claims

1. A method of accessing a service or resource provided to a user of a network terminal (T1), wherein an input of authentication data is required, that is checked before granting access,
**characterised in** the following steps:
• the network terminal (T1) sending a notification (M3) to a personal user device (T2), said notification (M3) comprising at least an identification of the requested service or resource,
• said personal users device (T2) determining authentication data corresponding to said service or resource and said user,
• said personal users device (T2) sending said authentication data (M4) to said network terminal (T1) and
• said network terminal (T1) receiving said authentication data (M4).

2. A method according to claim 1, wherein said service or resource is provided by a network server (SV), wherein the access to said service or resource is provided by an access server (SV), that is similar or different to the network server, wherein said access server (SV) sends a request for authentication (M2) to said network terminal (T1) and wherein after reception of the authentication data (M4), said network terminal (T1) sends a request response (M5) to said server (SV).

3. A method according to claim 2, wherein the notification (M3) comprises a challenge value and wherein the authentication data determined by the personal users device (T2) comprises a response value combining said challenge value and a secret value stored within the personal users device (T2).

4. A method according to claim 2, wherein the request response (M5) comprises a user identification and a password.

5. A method according to claim 2, wherein the communication between the personal user device and the network terminal or the server (SV) is encrypted.

6. A method according to claim 2, wherein an access function has to be activated by entering a personal identification number into the personal user device (T2), for enabling the sending of said authentication data (M4) to said network terminal (T1).

7. A method according to claim 3, wherein the determination of the response value is carried out by a subscriber identity module incorporated in or connected to the personal user device (T2).

8. A network terminal (T1) of a communication network (IPN) comprising an interface for communicating with a personal user device (T2),
**characterised in, that** means are comprised for:
• receiving a request for authentication (M2) from said communication network (IPN),
• sending on said interface a notification (M3) comprising at least an identification of a service or resource,
• receiving on said interface said authentication data (M4) and
• generating a response (M5) based on said authentication data (M4).

9. A personal user device (T2) comprising an interface for communicating with a network terminal (T1) and a data base for storing authentication data for accessing different services, **characterised in, that** means are comprised for:
• receiving on said interface a notification (M3) comprising at least an identification of a service or resource,
• accessing authentication data associated with said service or resource identification from said data base and
• sending said authentication data (M4) on said interface.
